# EUROPÄISCHE PATENTSCHRIFT

(11) **EP 2 019 927 B1**
(45) Veröffentlichungstag und Bekanntmachung des Hinweises auf die Patenterteilung: **29.12.2010**
(21) Anmeldenummer: 07724554.6
(22) Anmeldetag: 25.04.2007
(51) Int. Cl.: F16C 33/14, C23C 4/08, C23C 10/28, F16C 33/12

(54) **GLEITLAGER, VERFAHREN ZUR HERSTELLUNG SOWIE VERWENDUNG EINES DERARTIGEN GLEITLAGERS**
PLAIN BEARING, METHOD FOR PRODUCTION AND USE OF A PLAIN BEARING OF SAID TYPE
ROULEMENT COULISSANT, SON PROCÉDÉ DE FABRICATION ET UTILISATION DUDIT ROULEMENT COULISSANT

(30) Priorität: 17.05.2006 DE 102006023384
(43) Veröffentlichungstag der Anmeldung: 04.02.2009
(73) Patentinhaber: SMS Siemag AG, 40237 Düsseldorf (DE)
(72) Erfinder: ROEINGH, Konrad, 57271 Hilchenbach (DE); KELLER, Karl, 57271 Hilchenbach (DE)
(74) Vertreter: Klüppel, Walter
(86) Internationale Anmeldenummer: PCT/EP2007/003624
(87) Internationale Veröffentlichungsnummer: WO 2007/131599

(56) Entgegenhaltungen:
- WO-A-00/23718
- JP-A- 2000 017 418

## Beschreibung

Die Erfindung betrifft gemäß einem ersten Erfindungsgedanken ein Gleitlager mit wenigstens einer aus einem eisenhaltigen Grundwerkstoff bestehenden Lagerbuchse, die laufflächenseitig mit einer aus Beschichtungsmaterial bestehenden Beschichtung versehen ist, und die mit dem Grundwerkstoff durch eine FeSn₂ enthaltende Verbindungszone metallurgisch verbunden ist, wobei die Dicke der FeSn₂ enthaltenden Verbindungszone höchstens 10 µm beträgt.

Ein weiterer Erfindungsgedanke betrifft ein Verfahren zur Herstellung eines Gleitlagers nach wenigstens einem der vorhergehenden Ansprüche, wobei wenigstens eine aus einem eisenhaltigen Grundwerkstoff bestehende Lagerbuchse laufflächenseitig mit einer wenigstens eine Lage aufweisenden, zumindest teilweise aus Lagermetall bestehenden Beschichtung versehen wird, wobei zumindest die der Lagerbuchse benachbarten Lage aus einem Sn enthaltenden Material, vorzugsweise Weißmetall besteht, das der zu beschichtenden Oberfläche in fester Form zugeführt und auf den eisenhaltigen Grundwerkstoff aufgeschmolzen wird.

Ein weiterer Erfindungsgedanke enthält eine bevorzugte Verwendung eines derartigen Gleitlagers.

Aus der WO 00/23718 sind ein Gleitlager sowie ein Verfahren eingangs erwähnter Art bekannt. Gemäß diesem bekannten Vorschlag wird die aus Weißmetall bestehende Beschichtung an das aus einem Eisenwerkstoff bestehende Tragteil / Lagerbuchse anlegiert. Die Bildung einer Legierung erfordert das Vorhandensein flüssiger Legierungskomponenten. Hierzu muss dementsprechend beim Beschichtungsvorgang so viel Wärme freigesetzt werden, dass nicht nur das Weißmetall schmilzt, sondern auch an der laufflächenseitigen Oberseite des Tragteils ein aus geschmolzenem Grundwerkstoff bestehendes Metallbad erzeugt wird. Die so erzeugten Schmelzen von Weißmetall und Eisenwerkstoff können miteinander legieren, wobei in großem Umfang FeSn₂ entsteht. Hierbei entsteht dementsprechend eine vergleichsweise dicke Verbindungszone, die weitgehend aus FeSn₂ besteht. Diese Verbindungszone ergibt zwar eine gute metallurgische Verbindung zwischen dem Grundwerkstoff und der Beschichtung. FeSn₂ stellt jedoch ein sehr sprödes Material dar, so dass es bereits bei geringeren Belastungen der bekannten Lageranordnung zur Bildung von Rissen und zu Sprödbruch kommen kann. Hinzu kommt, dass im Falle einer ungünstigen Abkühlung eine Umwandlung des beschichtungsnahen Eisenwerkstoffs zu Martensit stattfinden kann, der ebenfalls sehr spröde ist, wodurch der vorstehend genannte Nachteil noch verstärkt wird. Bei der bekannten Anordnung ergibt sich infolge der hohen Sprödheit und geringen Streckfähigkeit innerhalb eines vergleichsweise dicken Zwischenbereichs eine vergleichsweise kurze Lebensdauer.

Es ist auch bekannt, die aus Weißmetall bestehende Beschichtung im Schleudergussverfahren auf das Tragteil / die Laufbuchse aufzubringen. Dabei unterbleibt zwar die Bildung eines aus geschmolzenem Grundwerkstoff bestehenden Metallbads. Bei der Erstarrung des im Schleudergussverfahren aufgebrachten Weißmetalls kann es jedoch zu einer Trennung der Legierungskomponenten kommen, indem zunächst aus Cu₆Sn₅ bestehende, nadelförmige Kristalle und dann aus SbSn bestehende kubische Kristalle ausfallen und schließlich die verbleibende, zinnreiche Matrix erstarrt. Die Dichte von Cu₆Sn₅ ist größer, diejenige von SbSn kleiner als die Dichte der länger flüssigen Matrix. Die Cu₆Sn₅ -Kristalle wandern dementsprechend nach radial außen und schwächen dabei den Bereich, mit dem die Weißmetall-Beschichtung an den Grundwerkstoff anschließt, was sich ungünstig auf die Lebensdauer auswirken kann. Hierdurch entstehen Konzentrationen im äußeren Bereich, die Verteilung ist ungleichmäßig.

Ein gattungsgemäßes Gleitlager ist aus der JP 2000 017 418 bekannt.

Hiervon ausgehend ist es daher die Aufgabe der vorliegenden Erfindung, ein Gleitlager der eingangs erwähnter Art unter Vermeidung der Nachteile der bekannten Anordnungen so zu verbessern, dass eine hohe Lebensdauer erreicht wird. Weitere Aufgaben der vorliegenden Erfindung bestehen in der Angabe eines einfachen und kostengünstigen Verfahrens zur Herstellung eines erfindungsgemäßen Gleitlagers sowie in der Angabe einer bevorzugten Verwendung des erfindungsgemäßen Gleitlagers.

Die auf das Gleitlager sich beziehende Aufgabe wird in Verbindung mit dem gattungsgemäßen Gleitlager dadurch gelöst, dass die Dicke der Verbindungszone der Diffusionstiefe einer auf eisenhaltigen Grundwerkstoff aufgeschmolzenen Sn enthaltenden Lage, vorzugsweise Weißmetall-Lage entspricht.

Dadurch, dass eine aus FeSn₂ bestehende Verbindungszone nicht völlig unterdrückt, sondern in einem geringen Umfang zugelassen wird, ergibt sich in vorteilhafter Weise eine gute metallurgische Anbindung der Beschichtung an den eisenhaltigen Grundwerkstoff des Tragteils / der Lagerbuchse und damit eine hohe Haftfestigkeit. Andererseits ist in Folge der geringen Dicke der aus dem spröden FeSn₂ bestehenden Verbindungszone sichergestellt, dass die Verformungsfähigkeit des erfindungsgemäßen Gleitlagers insgesamt hierdurch nicht nennenswert negativ beeinflusst wird, so dass eine ausreichend hohe Sicherheit gegen Sprödbruch und Rissbildung gewährleistet ist.

Die auf das Verfahren sich beziehende Aufgabe wird in Verbindung mit dem gattungsgemäßen Verfahren dadurch gelöst, dass die zum Aufschmelzen zumindest der ersten Lage der Beschichtung erfolgende Übertragung von Energie auf die zu beschichtende Oberfläche und auf das dieser zugeführte Beschichtungsmaterial so kontrolliert erfolgt, dass nur das Beschichtungsmaterial vollständig schmilzt und der eisenhaltige Grundwerkstoff vollständig im erstarrten Zustand verbleibt.

Diese Maßnahmen ergeben in vorteilhafter Weise einen so geringen Wärmeeintrag in den Grundwerkstoff, dass die Bildung eines aus geschmolzenen Grundwerkstoff bestehenden Metallbads an der zu beschichtenden Oberfläche unterbleibt, sondern das Beschichtungsmaterial auf eine feste Metallunterlage aufgeschmolzen wird, wobei in Folge der vorhandenen Wärme eine Diffusion in Gang kommt, welche die erwünschte metallurgische Anbindung der Beschichtung an den Grundwerkstoff gewährleistet. Die Diffusionstiefe, die abhängig von der Erwärmung des Grundwerkstoffs ist, kann dabei auf einfache Weise so gesteuert werden, dass die hier als Folge der Diffusion erhaltene Verbindungszone innerhalb gewünschter Grenzen von höchstens 10 µm, vorzugsweise 0,5 - 5 µm liegt. Gleichzeitig können eine Martensitbildung im Bereich des Grundwerkstoffs sowie eine ungleichmäßige Kristallverteilung und eine grobe Kristallisationsstruktur im Bereich der Beschichtung vermieden werden. Ein weiterer Vorteil des erfindungsgemäßen Verfahrens ist darin zu sehen, dass hier toxische Lagermetalle, wie z.B. Cadmium, durch umweltverträgliche Elemente ersetzt werden können, wie z.B. Silber (Ag), Zink (Zn) oder dgl.. Da in vorteilhafter Weise keine Zusatzstoffe erforderlich sind, kann zur Bildung der Beschichtung insbesondere einfaches Weißmetall Verwendung finden, das nur Zinn, Antimon und Kupfer enthält und daher kostengünstig erhältlich ist.

Eine Verwendung finden derartige Gleitlager in der Hüttentechnik / metallurgischen Industrie, beispielsweise bei Walzgerüsten, Pressen usw., speziell der Lagerung von Walzen wie Arbeitswalzen, Zwischenwalzen, Stützwalzen in Lagern von Walzgerüsten zur Bearbeitung von metallischen und nichtmetallischen Bändern, Blechen und Profilen, da hier die lange Lebensdauer besonders hohe Kosten spart. Dabei ist das Lager bzw. sind die Lager beispielsweise als Metallgleitlager geschlossener Bauart, hydrodynamische Gleitlager, beispielsweise Walzenzapfenlager, oder hydrostatische Lager ausgebildet.

Eine Weiterbildung sieht vor, dass das als Lagermetall verwendete Pulver oder der als Lagermetall verwendete Draht am inneren Umfang des Lagers an vorbestimmten unterschiedlichen Zonen zugeführt wird, zur Erzeugung von Lagerflächen mit unterschiedlichen Eigenschaften. Hierdurch wird erreicht, dass ein minimales Kriechen, Einbetten von Schmutzteilen, Vermeidung von Kantenbelastung vorliegt. Vorzugsweise werden für die verschiedenen Zonen unterschiedliche Lagermetalle eingesetzt zur Erzielung der verschiedenen Eigenschaften.

Vorteilhafte Ausgestaltungen und zweckmäßige Fortbildungen der übergeordneten Maßnahmen sind in den Unteransprüchen angegeben.

Vorteilhaft kann die zu beschichtende Oberfläche des Grundwerkstoffs vor der Beschichtung gereinigt und/oder angeraut werden. Hierdurch wird die erwünschte Diffusion und dementsprechend die Ausbildung der durch Diffusion erhaltenen Verbindungszone begünstigt. Die Anrauung verhindert zudem eine Reflexion eines Strahls bzw. einer Strahlung, was die Kontrolle des Energieeintrags in den Grundwerkstoff erleichtert.

Eine weitere zweckmäßige Maßnahme kann darin bestehen, dass mehrere Lagen Beschichtungsmaterial aufeinander aufgeschmolzen werden. Hierdurch ist sichergestellt, dass der erforderliche Energiefluss so gering wie möglich, bleibt und dennoch eine vergleichsweise große Dicke der Beschichtung erreicht werden kann. Die Lagen können aus gleichem oder unterschiedlichem Material bestehen, was eine Anpassung der Lagereigenschaften an die Verhältnisse des Einzelfalls ermöglicht.

Zweckmäßig ist es außerdem, dass mehrere aus Beschichtungsmaterial bestehende Lagen mit unterschiedlichen Lagermetallen aufgebracht werden, zur Erzielung unterschiedlicher Eigenschaften.

Eine weitere vorteilhafte Ausgestaltung sieht vor, dass dem Beschichtungsmaterial eine solche Dicke vorgegeben wird, dass das Maximum der Scherspannungen infolge der Lagerbelastung außerhalb der Verbindungszone und innerhalb der Beschichtung liegt. Hierdurch wird erreicht, dass in der naturgemäß spröden Verbindungsschicht das Maximum der Scherspannung vermieden wird.

Zweckmäßig wird das Beschichtungsmaterial in Form aneinander anschließender Raupen auf den Grundwerkstoff aufgebracht, was eine einfache Kontrolle des Energieeintrags begünstigt. Hierdurch erzeugte Unebenheiten können einfach mittels eines weiteren Energieeintrages egalisiert werden, was die mechanische Nachbearbeitung erleichtert.

Weitere vorteilhafte Ausgestaltungen und zweckmäßige Fortbildungen der übergeordneten Maßnahmen sind in den restlichen Unteransprüchen angegeben und aus den nachstehenden Beispielsbeschreibungen anhand der Figuren 1 bis 3 näher entnehmbar.

In den nachstehend beschriebenen Zeichnungen zeigen:
- Figur 1: im Schnitt ein Walzenzapfenlager einer Walze eines Walzgerüs- tes;
- Figur 2: einen schematischen Schnitt durch ein mit einer doppellagigen Lagermetall-Beschichtung versehenes Tragteil / Lagerbuchse eines Gleitlagers; und
- Figur 3: eine Vorrichtung zur Beschichtung des Tragteils / der Lagerbuch- se eines Gleitlagers mit Lagermetall.

Hauptanwendungsgebiete der Erfindung sind Lager für Walzen von Walzgerüsten in der Hüttenindustrie oder Walzwerksindustrie oder auch Lager von Pressen. Der Aufbau und die Wirkungsweise derartiger Vorrichtungen sind an sich bekannt.

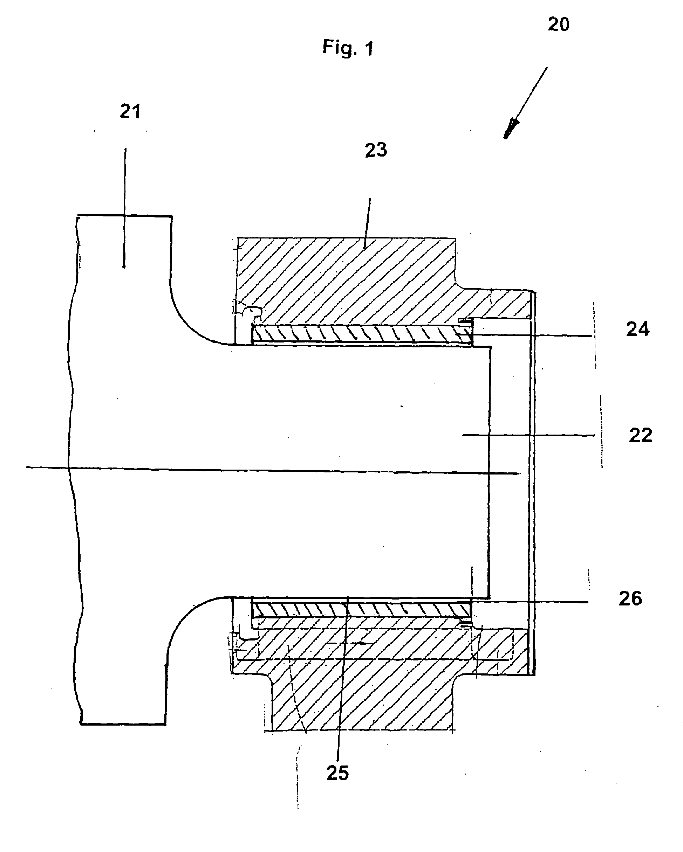

In Figur 1 ist im Schnitt ein Gleitlager 20 einer Walze 21 eines Walzgerüstes zum Walzen vom Blechen, Bändern und Profilen dargestellt. Dabei ist ein Walzenzapfen 22 der Walze 21 in einem Einbaustück 23 mittels einer Lagerbuchse 24 angeordnet. Das Tragteil 25 der Lagerbuchse 24 ist mit einer Beschichtung 26 versehen. Die Beschichtung 26 besteht aus Lagermetall, insbesondere Weißmetall, das gute Notlaufeigenschaften bietet.

Die Lagerbuchse 24 ist laufflächenseitig, also an der radial inneren Oberfläche, mit einer ein- oder mehrlagigen Beschichtung 26 versehen. Die Lagerbuchse 24 besteht aus einem eisenhaltigen Werkstoff, in der Regel aus Stahl. Die Beschichtung 26 besteht zumindest im radial äußeren, der Lagerbuchse 24 benachbarten Bereich aus einem Sn-haltigen, eine gute Anbindung an die Lagerbuchse 24 ergebenden Material und zumindest radial innen aus einem gute Notlaufeigenschaften aufweisenden Material. Für beides eignen sich Weißmetalle. Als Weißmetalle werde in der Praxis ZinnLegierungen bezeichnet.

Bei dem hier zur Bildung der Beschichtung 8, 26 Verwendung findenden Weißmetall kann es sich um einfaches Weißmetall handeln, das nur Zinn (Sn), Antimon (Sb) und Kupfer (Cu) enthält und frei von toxischen Zusätzen, wie Cadmium ist, die durch umweltverträgliche Elemente wie beispielsweise Silber (Ag), Zink (Zn) oder dgl. ersetzt werden können.

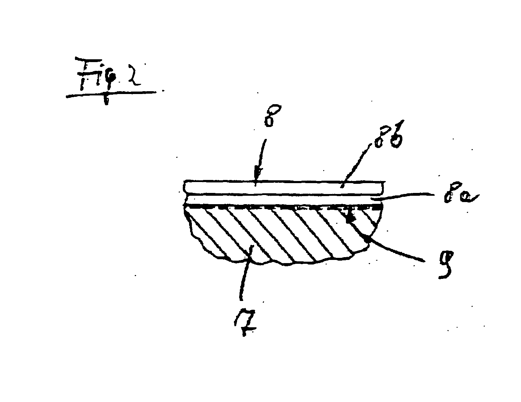

Das die Beschichtung 8, 26 bildende Material wird auf die radial innere Oberfläche des aus Stahl bestehenden Tragteils 25 der Lagerbuchse 24 in Form einer oder mehrerer Lagen aufgeschmolzen. Dabei wird im Grenzbereich zwischen dem eisenhaltigen Grundwerkstoff des Tragteils 25 der Lagerbuchse 24 und dem Material der Beschichtung 26 eine in Figur 2 durch eine unterbrochene Linie angedeutete Verbindungszone 9 gebildet, die im Wesentlichen aus FeSn₂ besteht, wobei das Eisen aus dem Grundwerkstoff und das Zinn aus dem Beschichtungsmaterial stammen. Hierzu genügt es, wenn die Beschichtung zumindest in ihren radial äußeren, dem Tragteil 25 benachbarten Bereich aus zinnhaltigem Material besteht.

FeSn₂ erweist sich als sehr spröder Stoff, was die Lebensdauer der Lagerbuchse 24 ungünstig beeinflussen kann. Andererseits wird die Verbindungszone 9 aber benötigt, um eine zuverlässige metallurgische Anbindung des Beschichtungsmaterials an den eisenhaltigen Grundwerkstoff zu bekommen.

Durch umfangreiche Versuche wurde ermittelt, dass bei einer Dicke der aus FeSn₂ bestehenden Verbindungszone 9 von höchstens 10 µm (10 Mikron) sowohl eine gute metallurgische Anbindung des Beschichtungsmaterials an den eisenhaltigen Grundwerkstoff als auch eine noch ausreichende Verformungsfähigkeit der beschichteten Lagerbuchse 24 und damit eine akzeptable Lebensdauer erreicht werden können. Die Versuche haben weiter gezeigt, dass bereits bei einer Dicke der Verbindungszone 9 von 0,5 - 5 µm (0,5 - 5 Mikron) eine ausreichende metallurgische Anbindung erreicht wird, wobei die Verformungsfähigkeit besonders gut ist.

Das Aufschmelzen des Beschichtungsmaterials erfolgt daher so, dass die Verbindungszone 9 nicht dicker als 10 µm, vorzugsweise nicht dicker als 0,5 - 5 µm wird. Hierzu wird der Aufschmelzvorgang so durchgeführt, dass die Verbindungszone 9 nicht durch Legieren der beteiligten Metalle gebildet wird, sondern durch einen Diffusionsvorgang. Dieser wird durch geeignete Wärmeführung so gesteuert, dass die Diffusionstiefe höchstens 10 µm, vorzugsweise höchstens 0,5 - 5 µm beträgt.

Hierzu wird die zum Aufschmelzen des Beschichtungsmaterials auf den eisenhaltigen Grundwerkstoff des Tragteils 25 der Lagerbuchse 24 angewandte Energie so gesteuert, dass an der zu beschichtenden Oberfläche des Tragteils 25 der Lagerbuchse 24 kein aus geschmolzenem Grundwerkstoff bestehendes Metallbad erzeugt wird, sondern der Grundwerkstoff vollständig im erstarrten Zustand bleibt und nur das Beschichtungsmaterial geschmolzen wird.

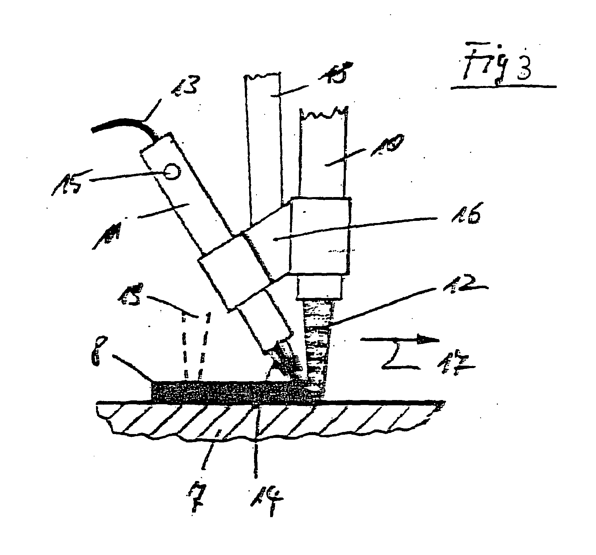

Zum Aufschmelzen des Beschichtungsmaterials auf den eisenhaltigen Grundwerkstoff findet vorzugsweise die der Figur 3 zugrunde liegende Vorrichtung Verwendung. Diese enthält eine Heizeinrichtung 10 und ein Zuführaggregat 11. Die Heizeinrichtung 10 erzeugt einen Laserstrahl 12, der etwa lotrecht zur zu beschichtenden Oberfläche des Tragteils 25 der Lagerbuchse 24 ausgerichtet ist. Das Zuführaggregat 11 ist gegenüber der Achse des Laserstrahls 12 geneigt. Der Neigungswinkel kann vorzugsweise 30° betragen. Mittels des Zuführaggregats 11 wird das Beschichtungsmaterial in festem Zustand der zu beschichtenden Oberfläche so zugeführt, dass es vom Laserstrahl 12 getroffen wird.

Das zuzuführende Beschichtungsmaterial kann in Form eines Pulvers oder in Form eines runden oder eckigen Drahtes vorliegen. Im dargestellten Beispiel wird das Beschichtungsmaterial in Form eines Drahts 13 zugeführt. Das Zuführaggregat 11 ist dementsprechend als Vorschubaggregat ausgebildet. Im Falle der Verwendung eines Beschichtungsmaterial - Pulvers ist das Zuführaggregat 11 als Blasdüse ausgebildet, die einen Pulverstrom abgibt. Zweckmäßig wird das Beschichtungsmaterial bis zur Erstarrung mit Schutzgas beaufschlagt, wie in Figur 3 durch Strömungspfeile 14 angedeutet ist. Vorteilhaft kann das Schutzgas über das Zuführaggregat 11 zugeführt werden, das mit einem geeigneten Versorgungsanschluss 15 versehen ist.

Die Heizeinrichtung 10 und das Zuführaggregat 11 sind im dargestellten Beispiel an einem gemeinsamen Arbeitskopf 16 aufgenommen. Dieser ist so angeordnet, dass zur Durchführung des Beschichtungsvorgangs eine durch einen Pfeil 17 angedeutete Relativbewegung zwischen dem Arbeitskopf 16 und dem zu beschichteten Tragteil 25 der Lagerbuchse 24 erzeugt werden kann. Dabei werden die Relativgeschwindigkeit zwischen Arbeitskopf 16 und zu beschichtendem Tragteil 25 sowie der vom Zuführaggregat 11 bewerkstelligte Beschichtungsmaterialdurchsatz sowie der vom Laserstrahl 12 bewerkstelligte Energieeintrag in das der zu beschichtenden Oberfläche zugeführte Beschichtungsmaterial sowie in die zu beschichtende Oberfläche des Tragteils 25 der Lagerbuchse 24 so aufeinander abgestimmt, dass das Beschichtungsmaterial vollständig schmilzt, dass aber an der zu beschichtenden Oberfläche kein aus geschmolzenem Grundwerkstoff bestehendes Metallbad entsteht, sondern ein Diffusionsvorgang mit der gewünschten Diffusionstiefe in Gang kommt.

Zweckmäßig erfolgt die Relativbewegung zwischen Arbeitskopf 16 und zu beschichtender Oberfläche so, dass die zu beschichtende Oberfläche vom Arbeitskopf 16 zeilenförmig abgefahren wird. Im dargestellten Beispiel ist der Arbeitskopf 16 hierzu an einem entsprechend bewegbaren Arm 18 angebracht. Infolge der zeilenförmigen Bewegung wird das Beschichtungsmaterial in Form von parallelen Raupen auf die zu beschichtende Oberfläche aufgebracht. Die hierbei sich ergebende, wellenförmige Oberseite kann durch einen zweiten, in Figur 3 durch unterbrochene Linien angedeuteten Laserstrahl 19 egalisiert werden. Die hierzu erforderliche Heizeinrichtung 10 kann ebenfalls am Arbeitskopf 16 angebracht sein. Es wäre aber auch denkbar, zur Erzeugung der Laserstrahlen 12 und 19 eine gemeinsame Heizeinrichtung vorzusehen. Ebenso wäre es denkbar, auf einen zweiten Laserstrahl zu verzichten und die Egalisierung bei einem zweiten Durchgang ohne Zufuhr von Beschichtungsmaterial mittels des Laserstrahls 12 zu bewerkstelligen. Als Laserquellen sind solche besonders zu bevorzugen, die gut steuerbar sind, wie YAG-, CO₂- oder Dioden-Laser, insbesondere fibergekuppelte Dioden-Laser. Die leichte Steuerbarkeit der Laserquelle erleichtert die genaue Dosierung des Energieeintrags in das Tragteil 7, 25 CO₂- und Dioden-Laser haben sich hier besonders bewährt.

Zweckmäßig wird das Beschichtungsmaterial in Form dünner Lagen aufgetragen, was die Kontrolle des Wärmeeintrags erleichtert. Um dennoch eine größere Gesamtdicke der Beschichtung zu erreichen, können mehrere Lagen aufeinander aufgetragen werden, wie in Figur 2 durch die aufeinander aufgetragenen Lagen 8a, 8b angedeutet ist. Dabei können einander kreuzende Raupen erzeugt werden. In jedem Fall wird die oberste Lage in der vorstehend beschriebenen Weise egalisiert, was eine anschließende mechanische Nachbearbeitung erleichtert. Die Lagen 8a und 8b können aus gleichem Material oder unterschiedlichen Materialien bestehen. In jedem Fall muss die untere, d.h. die radial äußerer Lage zur Bildung der FeSn₂-Zone aus zinnhaltigem Material wie Weißmetall bestehen.

Vor Beginn des Beschichtungsvorgangs wird die zu beschichtende Oberfläche der Lagerbuchse gereinigt und vorzugsweise gleichzeitig angeraut. Diese Anrauung verhindert eine nennenswerte Reflexion des Laserstrahls 12, was die Kontrolle des Energieeintrags ebenfalls erleichtert.

Da mittels der Energieeintragung nur eine kleinflächige Wärmebeaufschlagung erfolgt, kühlt das aufgeschmolzene Beschichtungsmaterial vergleichsweise schnell ab. Eine Schwerkrafttrennung der bei der Abkühlung der Beschichtungsschmelze sich bildenden, eine unterschiedliche Dichte aufweisenden Kristalle in Form von Cu₆Sn₅-Kristallen und SbSn-Kristallen kann daher nicht in Gang kommen. Dementsprechend wird innerhalb der Beschichtung 8, 26 eine über deren ganze Dicke gleichmäßige Verteilung dieser Kristalle und dementsprechend ein äußerst homogener Materialaufbau erreicht. Vorzugsweise sind dabei die Kristalle so ausgebildet, dass sie kleiner oder gleich 5 µm und vorzugsweise globular ausgebildet sind. Die Abkühlung des beschichteten Tragteils 7, 25 kann so erfolgen, dass im eisenhaltigen Grundwerkstoff des Tragteils 7, 25 der Lagerbuchse 24 keine Umwandlung in Martensit erfolgt, so dass der Grundwerkstoff auch in seinem die Beschichtung aufnehmenden Oberflächenbereich frei von Martensit ist.

Anstelle der bei der Ausführung gemäß Figur 3 als Heizeinrichtung Verwendung findenden Laserquelle können natürlich auch andere, einen Heizfleck erzeugende Heizeinrichtungen Verwendung finden. Eine bevorzugte Ausführung kann darin bestehen, zur Bildung der Heizeinrichtung eine Induktionsspule vorzusehen, die mit elektrischem Strom beaufschlagt wird, der vergleichsweise einfach steuerbar ist. Hierbei lässt sich daher der Wärmeeintrag in den Grundwerkstoff des Tragteils exakt dosieren.

## Patentansprüche

1. Gleitlager mit wenigstens einer aus einem eisenhaltigen Grundwerkstoff bestehenden Lagerbuchse (24),
die laufflächenseitig mit einer aus Beschichtungsmaterial bestehenden Beschichtung (8, 26) versehen ist, und
die mit dem Grundwerkstoff durch eine FeSn₂ enthaltende Verbindungszone (9) metallurgisch verbunden ist, wobei die Dicke der FeSn₂ enthaltenden Verbindungszone (9) höchstens 10 µm beträgt,
**dadurch gekennzeichnet,**
**dass** die Dicke der Verbindungszone (9) der Diffusionstiefe einer auf eisenhaltigen Grundwerkstoff aufgeschmolzenen Sn enthaltenden Lage, vorzugsweise Weißmetall-Lage entspricht.

2. Gleitlager nach Anspruch 1,
**dadurch gekennzeichnet,**
**dass** die Dicke der FeSn₂ enthaltenden Verbindungszone (9) höchstens 0,5 bis 5 µm beträgt.

3. Gleitlager nach Anspruch 1 oder 2,
**dadurch gekennzeichnet,**
**dass** der Grundwerkstoff der Lagerbuchse (24) zumindest in seinem die Beschichtung (26) aufnehmenden Bereich frei von Martensit ist.

4. Gleitlager nach Anspruch 1, 2 oder 3,
**dadurch gekennzeichnet,**
**dass** die Beschichtung (8, 26) über ihre Dicke eine homogene Struktur, insbesondere eine feine Kristallisationsstruktur sowie eine gleichmäßige Verteilung von Cu₆Sn₅-Kristallen und SbSn-Kristallen aufweist.

5. Gleitlager nach einem der vorhergehenden Ansprüche,
**dadurch gekennzeichnet,**
**dass** die in der Beschichtung (8, 26) eingeschlossenen Kristalle kleiner oder gleich 5 µm und vorzugsweise globular ausgebildet sind.

6. Gleitlager nach einem der vorhergehenden Ansprüche,
**dadurch gekennzeichnet,**
**dass** das die Beschichtung (8, 26) bildende Lagermetall, insbesondere Weißmetall, frei von toxischen Elementen, wie Cadmium oder dgl., ist.

7. Gleitlager nach einem der vorhergehenden Ansprüche,
**dadurch gekennzeichnet,**
**dass** die Beschichtung (8, 26) mehrere aufeinander angebrachte Lagen (8a, 8b) enthält.

8. Gleitlager nach Anspruch 7,
**dadurch gekennzeichnet,**
**dass** die Lagen (8a, 8b) der Beschichtung (8, 26) zumindest teilweise aus unterschiedlichem Material bestehen.

9. Gleitlager nach einem der vorhergehenden Ansprüche,
**dadurch gekennzeichnet,**
**dass** das die Beschichtung bildende Lagermetall nur Zinn (Sn), Antimon (Sb), und Kupfer (Cu) enthält.

10. Gleitlager nach einem der vorhergehenden Ansprüche 1 bis 8,
**dadurch gekennzeichnet,**
**dass** das die Beschichtung bildende Lagermetall, insbesondere Weißmetall, weiterhin nichttoxische Elemente wie Silber (Ag), Zink (Zn) oder dgl. enthält

11. Gleitlager nach einem der vorhergehenden Ansprüche,
**dadurch gekennzeichnet,**
**dass** das Tragteil (25) der Lagerbuchse (24) aus Stahl besteht.

12. Gleitlager nach einem der vorhergehenden Ansprüche,
**dadurch gekennzeichnet,**
**dass** die Lagerbuchse (24) an ihrer radial inneren Seite die aus Lagermetall, insbesondere Weißmetall, bestehende Beschichtung (26) aufweist.

13. Gleitlager nach einem der Ansprüche 1 bis 12,
**dadurch gekennzeichnet,**
**dass** das Gleitlager als hydrodynamisches Gleitlager ausgebildet ist.

14. Gleitlager nach einem der Ansprüche 1 bis 13,
**dadurch gekennzeichnet,**
**dass** das Gleitlager als hydrostatisches Gleitlager ausgebildet ist.

15. Verfahren zur Herstellung eines Gleitlagers nach wenigstens einem der vorhergehenden Ansprüche, wobei wenigstens eine aus einem eisenhaltigen Grundwerkstoff bestehende Lagerbuchse (24) laufflächenseitig mit einer wenigstens eine Lage (8a, 8b) aufweisenden, zumindest teilweise aus Lagermetall bestehenden Beschichtung (26) versehen wird, wobei zumindest die der Lagerbuchse (24) benachbarte erste Lage (8a) aus einem Sn enthaltenden Material, vorzugsweise Weißmetall, besteht, das der zu beschichtenden Oberfläche in fester Form zugeführt und auf den eisenhaltigen Grundwerkstoff aufgeschmolzen wird,
**dadurch gekennzeichnet,**
**dass** die zum Aufschmelzen zumindest der ersten Lage (8a) der Beschichtung (26) erfolgende Übertragung von Energie auf die zu beschichtende Oberfläche und auf das dieser zugeführte Beschichtungsmaterial so kontrolliert erfolgt, dass nur das Beschichtungsmaterial vollständig schmilzt und der eisenhaltige Grundwerkstoff vollständig im erstarrten Zustand verbleibt.

16. Verfahren nach Anspruch 15,
**dadurch gekennzeichnet,**
**dass** mittels eines Diffusionsvorgangs im Grenzbereich zwischen Beschichtung (8, 26) und Grundwerkstoff eine FeSn₂ enthaltende Verbindungszone (9) erzeugt wird.

17. Verfahren nach einem der vorhergehenden Ansprüche 15 oder 16,
**dadurch gekennzeichnet,**
**dass** die zu beschichtende Oberfläche des Grundwerkstoffs vor der Beschichtung gereinigt und/oder angeraut wird.

18. Verfahren nach einem der vorhergehenden Ansprüche 15 bis 17,
**dadurch gekennzeichnet,**
**dass** das Lagermetall, insbesondere Weißmetall, der zu beschichtenden Oberfläche als Pulver und/oder als runder oder eckiger Draht und/oder als rundes oder eckiges Band zugeführt wird.

19. Verfahren nach einem der vorhergehenden Ansprüche 15 bis 18,
**dadurch gekennzeichnet,**
**dass** dem Beschichtungsmaterial eine solche Dicke vorgegeben wird, dass das Maximum der Scherspannungen infolge der Lagerbelastung außerhalb der Verbindungszone (9) und innerhalb der Beschichtung (8, 26) liegt.

20. Verfahren nach einem der vorhergehenden Ansprüche 18 bis 19,
**dadurch gekennzeichnet,**
**dass** das Pulver oder der Draht am inneren Umfang des Lagers an vorbestimmten unterschiedlichen Zonen aus gleichen oder aus unterschiedlichen Lagermetallen zugeführt wird, zur Erzeugung von Lagerflächen mit unterschiedlichen Eigenschaften.

21. Verfahren nach einem der vorhergehenden Ansprüche 15 bis 20,
**dadurch gekennzeichnet,**
**dass** das Beschichtungsmaterial der zu beschichtenden Oberfläche so zugeführt wird, dass es von einem Laserstrahl (12) getroffen wird.

22. Verfahren nach einem der vorhergehenden Ansprüche 15 bis 21,
**dadurch gekennzeichnet,**
**dass** das Beschichtungsmaterial in Form paralleler, aneinander anschließender Raupen auf den Grundwerkstoff aufgebracht wird.

23. Verfahren nach einem der Ansprüche 15 bis 22,
**dadurch gekennzeichnet,**
**dass** zum Aufschmelzen zumindest der ersten Lage (8a), vorzugsweise aller Lagen (8a, 8b), der Beschichtung (26) eine einen Heizfleck erzeugende, gegenüber der Lagerbuchse (24) relativ bewegliche Heizeinrichtung, vorzugsweise wenigstens ein Laserstrahl (12) und/oder wenigstens eine Induktionsspule, verwendet wird.

24. Verfahren nach Anspruch 23,
**dadurch gekennzeichnet,**
**dass** das Beschichtungsmaterial der zu beschichtenden Oberfläche jeweils im bei der Energieübertragung erzeugten Heizfleck zugeführt wird.

25. Verfahren nach einem der vorhergehenden Ansprüche 15 bis 24,
**dadurch gekennzeichnet,**
**dass** mehrere Beschichtungsmaterial - Lagen gegebenenfalls mit unterschiedlichen Eigenschaften und / oder aus unterschiedlichen Werkstoffen aufeinander aufgeschmolzen werden.

26. Verfahren nach einem der vorhergehenden Ansprüche 15 bis 25,
**dadurch gekennzeichnet,**
**dass** die Oberseite wenigstens der letzten auf den Grundwerkstoff aufgeschmolzenen Lage (8b), vorzugsweise aller Lagen (8a, 8b), durch Energiezufuhr vergleichmäßigt wird.

27. Verfahren nach einender vorhergehenden Ansprüche 15 bis 26,
**dadurch gekennzeichnet,**
**dass** das geschmolzene Beschichtungsmaterial jeweils bis zur Erstarrung mit Schutzgas beaufschlagt wird.

28. Verfahren nach einem der vorhergehenden Ansprüche 21 bis 26,
**dadurch gekennzeichnet,**
**dass** zur Bildung des Laserstrahls (12) ein YAG-Laser, ein CO₂-Laser, ein Diode-Laser, ein Fibre-Coupled-Diode-Laser oder dgl. Verwendung findet.

29. Verwendung eines Gleitlagers nach einem der vorhergehenden Ansprüche in der Hüttentechnik, beispielsweise bei Walzgerüsten, Pressen oder dgl.

30. Verwendung eines Gleitlagers nach Anspruch 29 zum Lagern von Walzen in einem Walzgerüst zum Walzen von metallischen und nichtmetallischen Bändern, Blechen und Profilen.

## Claims

1. Plain bearing with at least one bearing bush (24) consisting of a ferrous base material, which is provided at the running surface side with a coating (8, 26) consisting of a coating material and metallurgically connected with the base material by a connecting zone (9) containing FeSn₂, wherein the thickness of the connecting zone (9) containing FeSn₂ is at most 10 microns, **characterised in that** the thickness of the connecting zone (9) corresponds with the diffusion depth of a layer melted onto a ferrous base material and containing Sn, preferably a white-metal layer.

2. Plain bearing according to claim 1, **characterised in that** the thickness of the connecting zone (9) containing FeSn₂ is at most 0.5 to 5 microns.

3. Plain bearing according to claim 1 or 2, **characterised in that** the base material of the bearing bush (24) is free of martensite at least in its region receiving the coating (26).

4. Plain bearing according to claim 1, 2 or 3, **characterised in that** the coating (8, 26) has over its thickness a homogenous structure, particularly a fine crystallisation structure as well as a uniform distribution of Cu₆Sn₅ crystals and SbSn crystals.

5. Plain bearing according to any one of the preceding claims, **characterised in that** the crystals included in the coating (8, 26) are formed to be smaller than or equal to 5 microns and are preferably globular.

6. Plain bearing according to any one of the preceding claims, **characterised in that** the bearing metal forming the coating (8, 26), particularly white metal, is free of toxic elements such as cadmium or the like.

7. Plain bearing according to any one of the preceding claims, **characterised in that** the coating (8, 26) includes several layers (8a, 8b) applied one on the other.

8. Plain bearing according to claim 7, **characterised in that** the layers (8a, 8b) of the coating (8, 26) consist at least in part of different materials.

9. Plain bearing according to any one of the preceding claims, **characterised in that** the bearing metal forming the coating contains only tin (Sn), antimony (Sb) and copper (Cu).

10. Plain bearing according to any one of the preceding claims 1 to 8, **characterised in that** the bearing metal forming the coating, particularly white metal, further contains nontoxic elements such as silver (Ag), zinc (Zn) or the like.

11. Plain bearing according to any one of the preceding claims, **characterised in that** the support part (25) of the bearing bush (24) consists of steel.

12. Plain bearing according to any one of the preceding claims, **characterised in that** the bearing bush (24) has at its radially inner side the coating (26) consisting of bearing metal, particularly white metal.

13. Plain bearing according to any one of claims 1 to 12, **characterised in that** the plain bearing is formed as a hydrodynamic plain bearing.

14. Plain bearing according to any one of claims 1 to 13, **characterised in that** the plain bearing is formed as a hydrostatic plain bearing.

15. Method of producing a plain bearing according to at least one of the preceding claims, wherein at least one bearing bush (24) consisting of a ferrous base material is provided on the running surface side with a coating (26) having at least one layer (8a, 8b) and consisting at least in part of bearing metal, wherein at least the first layer (8a) adjacent to the bearing bush (24) consists of a material containing Sn, preferably white metal, which is supplied in solid form to the surface to be coated and is melted on the ferrous base material, **characterised in that** the transmission of energy, which is carried out for melting at least the first layer (8a) of the coating (26), to the surface to be coated and to the coating material to be fed thereto is carried out in such a controlled manner that only the coating material completely melts and the ferrous base material remains entirely in the solidified state.

16. Method according to claim 15, **characterised in that** a connecting zone (9) containing FeSn₂ is produced by means of a diffusion process in the boundary region between coating 8, 26 and base material.

17. Method according to one of the preceding claims 15 and 16, **characterised in that** the surface of the base material to be coated is cleaned and/or roughened before coating.

18. Method according to any one of the preceding claims 15 to 17, **characterised in that** the bearing metal, particularly white metal, of the surface to be coated is fed as powder and/or as round or polygonal wire and/or as round or polygonal strip.

19. Method according to any one of the preceding claims 15 to 18, **characterised in that** such a thickness is predetermined for the coating material that the maximum of the shear stresses as a consequence of the bearing load lies outside the connecting zone (9) and within the coating (8, 26).

20. Method according to one of the preceding claims 18 and 19, **characterised in that** the powder or the wire is fed to the inner circumference of the bearing at predetermined different zones of the same or different bearing metals for producing bearing surfaces with different characteristics.

21. Method according to anyone of the preceding claims 15 to 20, **characterised in that** the coating material of the surface to be coated is fed in such a manner that it is impinged on by a laser beam (12).

22. Method according to any one of the preceding claims 15 to 21, **characterised in that** the coating material is applied to the base material in the form of a succession of parallel beads.

23. Method according to any one of claims 15 to 22, **characterised in that** for melting on at least the first layer (8a), preferably all layers (8a, 8b), of the coating (26) use is made of a heating device, preferably at least one laser beam (12) and/or at least one induction coil, producing a hot spot and movable relative to the bearing bush (24).

24. Method according to claim 23, **characterised in that** the coating material is fed to the surface, which is to be coated, in each instance to the hot spot produced in the energy transmission.

25. Method according to any one of the preceding claims 15 to 24, **characterised in that** several coating material layers optionally with different characteristics and/or different materials are melted one on the other.

26. Method according to any one of the preceding claims 15 to 25, **characterised in that** the upper side of at least the last layer (8b), preferably all layers (8a, 8b), melted on the base material is evened out by the feed of energy.

27. Method according to any one of the preceding claims 15 to 26, **characterised in that** the molten coating material is acted on in each instance by protective gas until hardening.

28. Method according to any one of the preceding claims 21 to 26, **characterised in that** for formation of the laser beam (12) use is made of a YAG laser, a CO₂ laser, a diode laser, a fibre-coupled diode laser or the like.

29. Use of a plain bearing according to any one of the preceding claims in iron and steel technology, for example in roll stands, presses or the like.

30. Use of a plain bearing according to claim 29 for the journalling of rolls in a roll stand for the rolling of metallic and non-metallic strips, sheets and sections.

## Revendications

1. Palier lisse présentant au moins un coussinet (24) en un matériau de base contenant du fer, qui est pourvu, côté surface de roulement, d'un revêtement (8, 26) constitué par un matériau de revêtement et qui est relié métallurgiquement avec le matériau de base par une zone de liaison (9) contenant du FeSn₂, l'épaisseur de la zone de liaison (9) contenant du FeSn₂ étant d'au plus 10 µm, **caractérisé**
**en ce que** l'épaisseur de la zone de liaison (9) correspond à la profondeur de diffusion d'une couche contenant du Sn fondu sur un matériau de base contenant du fer, de préférence une couche de métal blanc.

2. Palier lisse selon la revendication 1, **caractérisé**
**en ce que** l'épaisseur de la zone de liaison (9) contenant du FeSn₂ est d'au plus 0,5 à 5 µm.

3. Palier lisse selon la revendication 1 ou 2, **caractérisé en ce que** le matériau de base du coussinet (24) au moins dans la zone reprenant le revêtement (26) est exempt de martensite.

4. Palier lisse selon la revendication 1, 2 ou 3, **caractérisé en ce que** le revêtement (8, 26) présente sur son épaisseur une structure homogène, en particulier une structure de cristallisation fine ainsi qu'une répartition régulière de cristaux de Cu₆Sn₅ et de cristaux de SbSn.

5. Palier lisse selon l'une quelconque des revendications précédentes, **caractérisé**
**en ce que** les cristaux inclus dans le revêtement (8, 26) sont plus petits à ou de 5 µm et présentent de préférence une forme globulaire.

6. Palier lisse selon l'une quelconque des revendications précédentes, **caractérisé**
**en ce que** le métal de palier formant le revêtement (8, 26), en particulier du métal blanc, est exempt d'éléments toxiques tels que le cadmium ou d'autres choses semblables.

7. Palier lisse selon l'une quelconque des revendications précédentes, **caractérisé**
**en ce que** le revêtement (8, 26) contient plusieurs couches (8a, 8b) appliquées les unes sur les autres.

8. Palier lisse selon la revendication 7, **caractérisé en ce que** les couches (8a, 8b) du revêtement (8, 26) sont au moins partiellement constituées par un matériau différent.

9. Palier lisse selon l'une quelconque des revendications précédentes, **caractérisé**
**en ce que** le métal de palier formant le revêtement ne contient que de l'étain (Sn), de l'antimoine (Sb), et du cuivre (Cu).

10. Palier lisse selon l'une quelconque des revendications précédentes 1 à 8, **caractérisé**
**en ce que** le métal de palier formant le revêtement, en particulier du métal blanc, contient en outre des éléments non toxiques tels que de l'argent (Ag), du zinc (Zn) ou analogues.

11. Palier lisse selon l'une quelconque des revendications précédentes, **caractérisé**
**en ce que** le partie support (25) du coussinet (24) est en acier.

12. Palier lisse selon l'une quelconque des revendications précédentes, **caractérisé**
**en ce que** le coussinet (24) présente sur sa face radialement interne le revêtement (26) constitué de métal de palier, en particulier de métal blanc.

13. Palier lisse selon l'une quelconque des revendications précédentes 1 à 12, **caractérisé**
**en ce que** le palier lisse est réalisé sous forme de palier lisse hydrodynamique.

14. Palier lisse selon l'une quelconque des revendications précédentes 1 à 13, **caractérisé**
**en ce que** le palier lisse est réalisé sous forme de palier lisse hydrostatique.

15. Procédé pour la fabrication d'un palier lisse selon au moins l'une quelconque des revendications précédentes, où au moins un coussinet (24) constitué par un matériau de base contenant du fer est pourvu sur sa surface de roulement par un revêtement (26) présentant au moins une couche (8a, 8b), au moins partiellement constituée par du métal de palier, où au moins la couche (8a) la plus proche du coussinet (24) est constituée par un matériau contenant Sn, de préférence du métal blanc, qui est amené à l'état solide sur la surface à revêtir et fondu sur le matériau de base contenant du fer, **caractérisé**
**en ce que** le transfert d'énergie réalisé pour la fusion au moins de la première couche (8a) du revêtement (26) à la surface à revêtir et au matériau de revêtement amené sur celle-ci est réalisé de manière tellement contrôlée que seul le matériau de revêtement fond complètement et le matériau de base contenant du fer reste complètement à l'état solidifié.

16. Procédé selon la revendication 15, **caractérisé**
**en ce qu'**une zone de liaison (9) contenant du FeSn₂ est produite au moyen d'un processus de diffusion à l'interface entre le revêtement (8, 26) et le matériau de base.

17. Procédé selon l'une quelconque des revendications précédentes 15 ou 16, **caractérisé**
**en ce que** la surface à revêtir du matériau de base est nettoyée et/ou rendue rugueuse avant le revêtement.

18. Procédé selon l'une quelconque des revendications précédentes 15 à 17, **caractérisé**
**en ce que** le métal du palier, en particulier du métal blanc, est amené sur la surface à revêtir sous forme de poudre et/ou sous forme de fil rond ou anguleux et/ou sous forme de bande ronde ou anguleuse.

19. Procédé selon l'une quelconque des revendications précédentes 15 à 18, **caractérisé**
**en ce que** l'épaisseur donnée au matériau de revêtement est telle que le maximum des tensions de cisaillement suite à la sollicitation du palier se situe en dehors de la zone de liaison (9) et dans le revêtement (8, 26).

20. Procédé selon l'une quelconque des revendications précédentes 10 à 19, **caractérisé**
**en ce que** la poudre et/ou le fil est amené à la périphérie interne du palier, en des zones prédéfinies, différentes, en des métaux de palier identiques ou différents, pour la réalisation de surfaces de palier présentant des propriétés différentes.

21. Procédé selon l'une quelconque des revendications précédentes 15 à 20, **caractérisé**
**en ce que** le matériau de revêtement de la surface à revêtir est amené de manière telle qu'il est touché par un rayon laser (12).

22. Procédé selon l'une quelconque des revendications précédentes 15 à 21, **caractérisé**
**en ce que** le matériau de revêtement est appliqué sous forme de cordons parallèles, se raccordant les uns aux autres, sur le matériau de base.

23. Procédé selon l'une quelconque des revendications 15 à 22, **caractérisé**
**en ce qu'**on utilise, pour la fusion au moins de la première couche (8a), de préférence de toutes les couches (8a, 8b), du revêtement (26) un dispositif de chauffage produisant une tache chaude, mobile par rapport au coussinet (24), de préférence au moins un rayon laser (12) et/ou au moins une bobine d'induction.

24. Procédé selon la revendication 23, **caractérisé**
**en ce que** le matériau de revêtement est amené sur la surface à revêtir à chaque fois dans la tache chaude produite lors du transfert d'énergie.

25. Procédé selon l'une quelconque des revendications précédentes 15 à 24, **caractérisé**
**en ce que** plusieurs couches de matériau de revêtement, le cas échéant avec des propriétés différentes et/ou constituées par des matériaux différents, sont fondues les unes sur les autres.

26. Procédé selon l'une quelconque des revendications précédentes 15 à 25, **caractérisé**
**en ce que** la face supérieure au moins de la dernière couche (8b) fondue sur le matériau de base, de préférence toutes les couches (8a, 8b), sont homogénéisées par apport d'énergie.

27. Procédé selon l'une quelconque des revendications précédentes 15 à 26, **caractérisé**
**en ce que** le matériau de revêtement fondu est à chaque fois soumis à un gaz de protection jusqu'à la solidification.

28. Procédé selon l'une quelconque des revendications précédentes 21 à 26, **caractérisé**
**en ce que** pour la réalisation du rayon laser (12), on utilise un laser YAG, un laser à CO₂, un laser à diode, un laser à diode à fibre couplée ou analogue.

29. Utilisation d'un palier lisse selon l'une quelconque des revendications précédentes dans la technique métallurgique, par exemple dans des cages de laminage, des presses ou d'autres choses semblables.

30. Utilisation d'un palier lisse selon la revendication 29 pour loger des cylindres dans une cage de laminage pour le laminage de bandes, de tôles et de profilés métalliques et non métalliques.
